# EUROPEAN PATENT SPECIFICATION

(11) **EP 2 024 410 B1**
(45) Date of publication and mention of the grant of the patent: **06.10.2010**
(21) Application number: 07783858.9
(22) Date of filing: 17.05.2007
(51) Int. Cl.: C08G 18/42, C08G 18/66

(54) **POLYURETHANE ELASTOMER WITH ENHANCED HYDROLYSIS RESISTANCE**
POLYURETHAN-ELASTOMER MIT ERHÖHTER HYDROLYSE-RESISTENZ
ÉLASTOMÈRE DE POLYURÉTHANNE PRÉSENTANT UNE RÉSISTANCE AMÉLIORÉE À L'HYDROLYSE

(30) Priority: 18.05.2006 US 801335 P
(43) Date of publication of application: 18.02.2009
(73) Proprietor: DOW GLOBAL TECHNOLOGIES INC., Midland, MI 48674 (US)
(72) Inventor: VAIRO, Giuseppe, I-42015 Correggio (IT); LISTA, Giuseppe, I-27025 Gambolo (IT)
(74) Representative: Raynor, John
(86) International application number: PCT/US2007/069108
(87) International publication number: WO 2007/137105

(56) References cited:
- US-A- 5 239 038
- US-A- 5 760 158
- US-A1- 2003 032 757

## Description

This invention relates to a process for improving the hydrolysis resistance of polyurethane microcellular elastomers, polyester polyols for implementing this process and urethane elastomers obtained by this process and their use.

Microcellular elastomeric polyurethane polymer for applications such as, for example, shoe soles desirably exhibits good physical properties including especially abrasion resistance, flexibility and durability. Typically such elastomers are obtained by reaction of a prepolymer, which is the reaction product of a polyester polyols or polyether resin and an organic diisocyanate, with a hydroxylated compound consisting of at least one polyester or polyether polyol in the presence of a catalyst, blowing agent and surfactant. The preparation of polyurethane polymer by such procedures is described, for example, in patent publications E.P. 235,888; E.P. 175,733; U.S. Patents 3,591,532; 3,901,959; 4,647, 596 and 4,757,095.

Polyurethane elastomers from polyesters have good physical properties, however; they are sensitive to water and physical properties suffer from humid aging due to hydrolytic attach on the ester bond. This is particularly disadvantageous when the elastomers are intended to form certain shoe soles or when used to produce parts requiring a good resistance to hydrolysis. Urethane elastomers based on polyethers are not sensitive to hydrolysis but generally possess poorer physical properties.

To improve the hydrolysis resistance of polyester-based urethane elastomers, anti-hydrolysis additives, such as polycarbodiimides, are added to the formulation for elastomer production. Such additives are relatively costly and do not systematically achieve an improvement in the resistance to hydrolysis. Another approach to improve hydrolysis resistance of polyester elastomers, as disclosed in EP Publication 0 156 665, is to use dimerized fatty acids in the formulation of either the hydroxylated compound or the prepolymer.

It is therefore an object of the present invention to provide polyurethane elastomers based on polyester polyols with the elastomer having improved intrinsic hydrolytic stability while maintaining the typical characteristics of polyesters based polyurethanes, such as, tensile strength and fatigue resistance.

It would also be advantageous to have a polyester polyol of low viscosity for easier handling in the production of prepolymer and/or production of the final elastomer.

The present invention is a process for preparing a elastomer by contacting under reaction conditions:
a) an isocyanate component comprising an isocyanate-terminated prepolymer having an isocyanate (NCO) content of 2 to 40 weight percent where the prepolymer is the reaction product of a stoichiometric excess of one or more di-or polyisocyanate with a first polyol composition;
b) a second polyol composition; and
c) an effective amount of a blowing agent to provide a polyurethane elastomer with a density from 200 to 1200 kg/m³;
   wherein a) and b) are at an isocyanate index of from 85 to 115, and
   the first polyol composition, the second polyol composition, or both, contain a polyester based on a polycarboxylic acid or lactone component and glycol component, wherein the glycol component contains isomers of 1,3- and 1,4-cycloehexane dimethanol (1,3-/1,4-CHDM) where the ratio of the 1,3-/1,4-isomers is from 35:65 to 65:35 and 1,3-/1,4-CHDM is from 1 to 30 weight percent of the total elastomer.

In another embodiment, the present invention is an isocyanate-terminated prepolymer having an isocyanate (NCO) content of 2 to 40 weight percent where the prepolymer is the reaction product of a stoichiometric excess of one or more di-or polyisocyanate with a polyol composition wherein the polyol composition contains at least one polyester wherein 1,3-/1,4-CHDM is from 7 to 60 weight percent of the polyester and the ratio of 1,3- to 1,4-isomers is from 35:65 to 65:35.

In a further embodiment, the present invention is a process as above where both the first and second polyol composition each contain at least one polyester wherein 1,3-/1,4-CHDM is a portion of the glycol component.

If still another embodiment, the present invention is a shoe sole prepared by the processes or prepolymer described above.

As used herein the term polyols are those materials having at least one group containing an active hydrogen atom capable of undergoing reaction with an isocyanate. Preferred among such compounds are materials having at least two hydroxyls, primary or secondary, or at least two amines, primary or secondary, carboxylic acid, or thiol groups per molecule. Compounds having at least two hydroxyl groups or at least two amine groups per molecule are especially preferred due to their desirable reactivity with polyisocyanates.

It has been found when utilizing as part of the polyol component for an elastomer, a polyester containing 1,3-/1,4-CHDM, microcellular elastomers produced from such elastomers have improved hydrolytic stability while maintaining good physical properties.

These advantages are observed where 1,3-/1,4-CHDM comprises from 1 to 30 weight percent of the elastomer. For shoe sole applications, it is preferred 1,3-/1,4-CHDM comprises from 3 to 25, preferably from 5-20 and more preferably from 7 to 16 weight percent of the elastomer. While the polyesters based on 1,3-/1,4-CHDM are particularly suited for the production of microcellular elastomer, such polyester have applicability for use in the production of thermoplastic polyurethanes (TPUs), especially where it is desired to have polyester based systems with increased hydrolysis resistance.

As stated above, polyesters are produced by the reaction of one or more polycarboxylic acid or lactone with a glycol component, for example, 1,3-/1,4-CHDM or with 1,3-/1,4-CHDM and additional polyhydroxy compound(s). The ratio of the 1,3- to 1,4-isomer for use in the present invention is generally from 35:65 to 65:35. Preferably the 1,3- to 1,4-isomer ratio is from 40:60 to 60:40. More preferably the 1,3- to 1,4-isomer ratio is from 45:55 to 55:45. Generally the stereoisomers will be in the range from 13-15 percent of cis 1,4; 29-32 percent of trans 1,4; 26-29 percent cis 1,3; and 25-31 percent of trans 1,3 based on the total weight of the 1,3- and 1.4-isomers

Suitable polycarboxylic acids can have two or more carboxylic acid groups or an equivalent number of anhydride groups on the basis that one anhydride group is equivalent to two acid groups. Such polycarboxylic acids are well known in the art. Preferably the polycarboxylic acid contains two carboxylic acid groups.

Examples of suitable polycarboxylic acids include aliphatic dicarboxylic acids having 2 to 12, preferably 2 to 8 carbon atoms in the alkylene radical. These acids include, for example, aliphatic dicarboxylic acids such as adipic acid, glutaric acid, pimelic acid, suberic acid, azelaic acid, sebacic acid, undecanedoic acid, dodecanadioic acid, succinic or hexanedioic acid; cycloaliphatic acids such as hexahydrophthalic acid and 1,3- and 1,4-cyclohexane dicarboxylic acid; 1,3- and 1,4-unsaturated alkane dioic acids such as fumaric or maleic acids; dimer acids; and aromatic acids such as phthalic acid and terephthalic. The anhydrides of the aforementioned polybasic acids such as maleic anhydride or phthalic anhydride can also be used. A combination of two or more of the polybasic acids may also be used. In one embodiment, it is preferred to use succinic acid, adipic acid or a combination thereof.

Illustrative examples of lactone which may be reacted with the glycol compoenent include δ-valerolactone, ε-caprolactone, ε-methyl-ε-caprolactone, and ξ-enantholactone. A preferred lactone is caprolactone.

Additional polyhydroxy compounds which may be present in addition to the 1,3-/1,4-CHDM include dihydric to octohydric alcohols. Examples of di- and multifunctional alcohols are ethylene glycol, diethylene glycol, propylene glycol, dipropylene glycol, 1,3-propanediol, 1,10-decanediol, glycerine, trimethylolpropane, 1,4-butanediol, and 1,6-hexanediol. If trifunctional or higher alcohols are used for the manufacture of the polyester polyols, for the production of elastomer for shoe soles, their amount is generally chosen in such that the functionality of a blend is a maximum of 2.8, preferably from 2 to 2.3. In one embodiment, ethylene glycol, diethylene glycol, butanediol, or a combination is used as an additional glycol component.

While the additional polyhydroxyl compounds are generally present with the 1,3-/1,4-CHDM when producing a polyester, for the present invention, a polyester may be made with 1,3-/1,4-CHDM as the sole glycol component and such polyester blended with other polyesters or polyethers to produce a final elastomer or TPU with the desired 1,3-/1,4-CHDM weight percent. Thus 1,3-/1,4-CHDM will comprise at least 7, preferably at least 10, and more preferably at least 15 percent by weight of the polyester. The polyester may contain 50, up to 55 or even up to 60 weight percent by weight of 1,3-/1,4-CHDM. The ability to adjust the level of 1,3-/1,4-CHDM in the polyester and subsequently in the formulation is well known to those skilled in the art.

Processes for the production of 1,3- and 1,4-cyclohexane dimethanol isomers and conversion to polyesters are known in the art. In one embodiment, the structural and configuration isomers of cyclohexane dimethanol are produced via the process disclosed in U.S. Patent 6,252,121, the disclosure of which is incorporated herein by reference. In general they cyclohexanedicarboxaldehyde is hydrogenated in the presence of a metal-organophosphorus ligand complex catalyst to produce the corresponding cyclic alcohol. The alcohol is then reacted with a polybasic acid to form a polyester.

Processes for the production of polyester polyols is also well known in the art. To prepare the polyester polyols, the organic poycarboxylic acids are polycondensed with polyhydric alcohols. To remove volatile byproducts, the polyester polyols can be subjected to distillation under reduced pressure, stripping with an inert gas, vacuum, etc.

The polyurethane prepolymers used in producing the elastomers of the present invention include a polyisocyanate component and an isocyanate reactive component also known as an active hydrogen containing material or polyol. The term polyurethane includes polymers containing linkages known to those in the art associated with the formation of a polyurethane, such as urea or polyureas, allophonate, biuret, etc.

The polyisocyanate component of the prepolymer formulations of the present invention can be advantageously selected from organic polyisocyanates, modified polyisocyanates, and mixtures thereof, and include aliphatic, aromatic and cycloaliphatic isocyanates. Aromatic polyisocyanates include, for example, 2,4-and 2,6-toluenediisocyanate (TDI) and the corresponding isomeric mixtures; 4,4'-, 2,4'- and 2,2'-diphenyl-methanediisocyanate (MDI) and the corresponding isomeric mixtures; polyphenyl polymethylene polyisocyanates (PMDI); and mixtures of the forgoing. Examples of aliphatic and cycloaliphatic isocyanate compounds include 1,6-hexamethylene-diisocyanate (HDI); isophorone diisocyanate (IPDI); 1,4-tetramethylene diisocyanate; 2,4- and 2,6-hexahydrotoluene-diisocyanate, the isomeric mixtures thereof; 4,4'-, 2,2'- and 2,4'-dicyclohexylmethanediisocyanate (H₁₂MDI), the isomeric mixtures thereof; 1,3-tetramethylene xylene diisocyanate; norbane diisocyanate; and 1,3- and 1,4-bis(isocyanatomethyl)cyclohexane can also be used with the present invention. Mixtures of the aromatic, aliphatic and cycloaliphatic isocyanates may also be used.

The polyisocyanate component of the formulations of the present invention can also include so-called modified multifunctional isocyanates, that is, products which are obtained through chemical reactions of the above diisocyanates and/or polyisocyanates. Exemplary are polyisocyanates containing esters, ureas, biurets, allophanates, carbodiimides and/or uretonimines; isocyanurate and/or urethane group containing diisocyanates or polyisocyanates.

In one preferred embodiment, the isocyanate-terminated prepolymers are prepared with 4,4'-MDI, or other MDI blends containing a substantial portion of the 4,4'-isomer or MDI modified as described above. Preferably the MDI contains 90 and more preferably greater than 95 percent by weight of the 4,4'-isomer.

The polyol component for producing a prepolymer, or polyol for second polyol component, can be selected from polyether polyols, polyester polyols, polyhydroxy-terminated acetal resins, hydroxyl-terminated amines and polyamines. Examples of these and other suitable isocyanate-reactive materials are described more fully in U.S. Patent 4,394,491. Alternative polyols that may be used include polyalkylene carbonate-based polyols and polyphosphate-based polyols.

Suitable polyester polyols are as those described above. In one embodiment, the polyester polyols contains 1,3-/1-4-CHDM as the glycol component. The polyester, or other polyol used in making the prepolymer or in the second polyol composition, generally has an equivalent hydroxyl molecular weight from 250 to 2000, preferably from 300 to 1500 and more preferably from 500 to 1,300.

Suitable polyether polyols include those having a nominal functionality of from 2 to 8, preferably 2 to 6. Typically such polyether polyols may be obtained by reaction of an active hydrogen-containing initiator with a quantity of one or more alkylene oxides to give a product of desired hydroxyl nature and equivalent weight. Generally such alkylene oxides are C2 to C4 alkylene oxides and include butylenes oxide, ethylene oxide and propylene oxide or a mixture thereof. Exemplary initiators for polyether polyols include, for example, ethanediol, 1,2- and 1,3-propanediol, diethylene glycol, dipropylene glycol, tripropyleneglycol; polyethyleneglycol, polypropylene glycol; 1,4-butanediol, 1,6-hexanediol, glycerol, pentaerythritol, sorbitol, sucrose, neopentylglycol; 1,2-propylene glycol; trimethylolpropane glycerol; 1,6-hexanediol; 2,5-hexanediol; 1,4-butanediol; 1,4-cyclohexane diol; ethylene glycol; diethylene glycol; triethylene glycol; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); hydrogenated bisphenol; 9,9(10,10)-bishydroxymethyloctadecanol; 1,2,6-hexanetriol; and combination thereof. Catalysis for production of polyether polyols can be either anionic or cationic, with catalysts such as KOH, CsOH, boron trifluoride, a double metal cyanide complex (DMC) catalyst such as zinc hexacyanocobaltate or quaternary phosphazenium compound.

Other initiators for polyether polyols include linear and cyclic compounds containing an amine. Exemplary polyamine initiators include ethylene diamine, neopentyldiamine, 1,6-diaminohexane; bisaminomethyltricyclodecane; bisaminocyclohexane; diethylene triamine; bis-3-aminopropyl methylamine; triethylene tetramine various isomers of toluene diamine; diphenylmethane diamine; N-methyl-1,2-ethanediamine, N-Methyl-1,3-propanediamine, N,N-dimethyl-1,3-diaminopropane, N,N-dimethylethanolamine, 3,3'-diamino-N-methyldipropylamine, N,N-dimethyldipropylenetriamine, aminopropyl-imidazole.

Polylactone polyols may also be used and are generally di-or tri- or tetra-hydroxyl in nature. Such polyol are prepared by the reaction of a lactone monomer; illustrative of which is δ-valerolactone, ε-caprolactone, ε-methyl-ε-caprolactone, ξ-enantholactone, and the like; with an initiator that has active hydrogen-containing groups; illustrative of which is ethylene glycol, diethylene glycol, propanediols, 1,4-butanediol, 1,6-hexanediol, trimethylolpropane, and the like. The production of such polyols is known in the art, see, for example, United States Patent Nos. 3,169,945, 3,248,417, 3,021,309 to 3,021,317. The preferred lactone polyols are the di-, tri-, and tetra-hydroxyl functional ε-caprolactone polyols known as polycaprolactone polyols.

In one embodiment, at least one polyol which contains autocatalytic activity and can replace a portion or all of the amine and/or organometalic catalyst generally used in the production of polyurethane foams. Alternatively, such autocatalytic polyols may be added to enhance the demold time. When used, such autocatalytic polyols are generally part of the blend of the second polyol component. They will generally be used at a level of 0.05 to 10 weight percent of the second polyol component, preferably from 0.1 to 7 weight percent of the second polyol component.

Such autocatalytic polyols are disclosed in EP 539,819, in U.S. Patents 5,672,636; 3,428,708; 5,482,979; 4,934,579 and 5,476,969 and in WO 01 / 58,976.

For the present invention, the total polyol by weight in the prepolymer and second polyol component will be at least 50 weight percent polyester. Preferably at least 60 percent polyester and more preferably at least 70 percent polyester. The total polyol used in making the elastomers is generally 85 weight percent, up to 90, preferably up to 95 and even 100 percent polyester.

The isocyanate-terminated prepolymer for use in the present inventions are prepared by standard procedures well known to a person skilled in the art and such as disclosed in U.S. Patents 4,294,951; 4,555,562; 4,182,825 or PCT Publication WO2004074343. The components are typically mixed together and heated to promote reaction of the polyols and the polyisocyanate. The reaction temperature will commonly be within the range of 30°C to 150°C; a more preferred range being from 60°C to 100°C. The reaction is advantageously performed in a moisture-free atmosphere. An inert gas such as nitrogen, argon or the like can be used to blanket the reaction mixture. If desired, an inert solvent can be used during preparation of the prepolymer, although none is needed. A catalyst to promote the formation of urethane bonds may also be used.

The isocyanate is used in stoichiometric excess and reacted with the polyol component using conventional prepolymer reaction techniques to prepare prepolymers having from 2 to 40 weight percent free NCO groups. For producing elastomers for shoe soles, the prepolymers generally have from 2 to 30 weight percent free NCO groups" preferably from 5 to 25 weight percent, and more preferably from 10 to 25 weight percent.

In addition to the polyols described herein above other suitable polyols which may be present in the second polyol component include so-called polymer polyols such as described in U.S. Patent 4,394,491. Among the useful polymer polyols are dispersions of polymer, especially vinyl monomers, particularly styrene/acrylonitrile copolymers, in a continuous polyether polyol, polyester polyol phase or a mixture of polyether and polyester polyols.. Also useful are the polyisocyanate polyaddition (PIPA) polyols (dispersions of polyurea-polyuretahne particles in a polyol) and the polyurea dispersion in polyol, such as, polyharnstoff (PHD) polyols. Such polyols are described in "Polyurethane Handbook", by G. Oertel, Hanser publishers. Copolymer polyols of the vinyl type are described in, for example, U.S. Patents 4,390,645; 4,463,107; 4,148,840 and 4,574,137.

For prepolymers containing polyesters based on 1,3-/1,4-CHDM, such prepolymers will comprise at least 10 weight percent of the polyol component. Generally at least 20, preferably at least 30 and more preferably at least 40 weight percent of the polyol component is a polyester based on 1,3-/1,4-CHDM as the glycol component. Generally the 1,3-/1,4-CHDM based polyester will comprise at least 70 weight of the polyol component. Preferably such polyester will comprise at least 80 and more preferably at least 90 weight percent of the polyol component. In one embodiment, the 1,3-/1,4-CHDM based polyester is 100 weight percent of the polyol component.

It is also possible to use one or more chain extenders for the production of elastomers of the present invention. The presence of a chain extending agent provides for desirable physical properties, of the resulting polymer. For purposes of this invention, a chain extender is a material having two isocyanate-reactive groups per molecule and an equivalent weight per isocyanate-reactive group of less than 400, preferably less than 300 and especially from 31-125 daltons. Representative of suitable chain-extending agents include polyhydric alcohols, aliphatic diamines including polyoxyalkylenediamines, aromatic diamines and mixtures thereof. The isocyanate reactive groups are preferably hydroxyl, primary aliphatic or aromatic amine or secondary aliphatic or aromatic amine groups. Representative chain extenders include amines ethylene glycol, diethylene glycol, 1,3-propane diol, 1,3- or 1,4-butanediol, dipropylene glycol, 1,2- and 2,3-butylene glycol, 1,6-hexanediol, neopentylglycol, tripropylene glycol, ethylene diamine, 1,4-butylenediamine, 1,6-hexamethylenediamine, phenylene diamine, 1,5-pentanediol, 1,6-hexanediol, bis(3-chloro-4-aminophenyl)methane, 3,3'-dichloro-4,4-diaminodiphenylmethane, 4,4'-diaminodiphenylmethane, bisphenol-A; bisphenol-F, 1,3-propane di-p-aminobenzene, methylene bisorthochloroaniline (MOCA), 1,3-cyclohexandiol, 1,4-cyclohexanediol; 2,4-diamino-3,5-diethyl toluene and mixtures thereof. The 1,3- and/or 1,4-cyclohexane dimethanol may also be used as chain extenders. If used, chain extenders are typically present in an amount from 0.5 to 20, especially 2 to 16 parts by weight per 100 parts by weight of the polyol component.

Crosslinkers may be included in the second polyol component. For purposes of this invention "crosslinkers" are materials having three or more isocyanate-reactive groups per molecule and an equivalent weight per isocyanate-reactive group of less than 400. Crosslinkers preferably contain from 3-8, especially from 3-4 hydroxyl, primary amine or secondary amine groups per molecule and have an equivalent weight of from 30 to 200, especially from 50-125. Examples of suitable crosslinkers include diethanol amine, monoethanol amine, triethanol amine, mono- di- or tri(isopropanol) amine, glycerine, trimethylol propane, pentaerythritol, sorbitol and the like. If used, suitable amounts of crosslinkers are from 0.1 to 1 part by weight, especially from 0.25 to 0.5 part by weight, per 100 parts by weight of polyols.

The elastomer is prepared in the presence of a blowing agent. The blowing agent is present in an amount effective to produce the desired density, generally in the range of 200 kg/m³ to 1200 kg/m³. When shoe soled consists of two or more layers, such a sole will generally have a compact wear layer with a density of 900 to 1180 kg/m³ and a comfort layer having a density of 300 to 500 kg/m³. When water is used as the blowing agent, the amount of water may, is typically present from 0.01 parts to 2.0 parts and preferably 0.05 to 1.5 parts per hundred parts by weight of the second polyol component. More preferably water is present from 0.05 to 1.0 parts per 100 parts by weight of the second polyol component.

In addition to water, low boiling point liquids may be used as physical blowing agents. Generally such liquid is an inert organic compound that can vaporize under the influence of the reaction exotherm and typically has a boiling point of below 100° C. Exemplary of suitable organic compounds include halogenated hydrocarbons such as, for example, methylene chloride, trichlorofluoromethane, dichlorodifluoromethane, dichlorofluoromethane, dichlorotetrafluoroethane, 1,1,2-trichloro-1,2,2- trifluoroethane, 1,1,1-trichloroethane, 1,1,1-trichlorodifluoroethane, 1,1,1-trichlorofluoroethane, 1,1,1,2-tetrafluoroethane (134a), 1,1,1,3,3-pentafluorobutane (365mfc), 1,1,1,2,3,3,3-heptafluropropane (HFA 227), 1,1,1,3,3-pentafluoropropane (245fa), methyl formate, and mixtures thereof. Mixtures of these low boiling liquids with each other and or with hydrocarbons such as, for example, pentane (cyclopentane, isopentane, n-pentane), or entrained gases such as air, nitrogen or carbon dioxide may be used. Hydrocarbons and entrained gases may also be present in the absence of above mentioned types of low boiling liquids. Carbamates, such as disclosed in U.S. Patents 5,789,451 and 6,316,662 and EP 1 097 954, which release carbon dioxide during the foaming process, may also be used to provide a physical blowing agent. Typically, when present such physical blowing agents are used in an amount of from 0.1 to 10, preferably from 1 to 8 and more preferably from 1.5 to 6 weight percent by total weight of the second polyol component and optional chain-extending/cross-linking agent present. A combination of water and physical blowing agents may be used.

The ratio of the isocyanate component to the second polyol component is preferably at an isocyanate index of 85 to 115. Preferably the isocyanate index is from 90 to 110 and more preferably from 95 to 105. The isocyanate index is defined as 100 times the ratio of NCO groups to reactive hydrogens contained in the reaction mixture.

When preparing the polyurethane polymer according to the invention, optionally but advantageously there are present additional additives including catalysts, surfactants, fillers, pigments, fire retardants, antioxidants, and antistatic agents. The use of such additives is well-known in the art and reference is made thereto for this purpose.

Suitable catalysts include the tertiary amine and organometallic compounds such as described in U.S. Pat. 4,495,081. When using an amine catalyst advantageously it is present in from 0.1 to 3, preferably from 0.1 to 1 and more preferably from 0.4 to 0.8 weight percent by total weight of polyol and optional chain extending agent. When the catalyst is an organometallic catalyst, advantageously it is present in from 0.001 to 0.2, preferably from 0. 002 to 0.1 and more preferably from 0.01 to 0.05 weight percent by total weight of polyol and optional chain extending agent. Particularly useful catalysts include in the case of amine catalysts; triethylenediamine, bis(N,N- dimethylaminoethyl)ether and di(N,N-dimethylaminoethyl)amine and in the case of the organometallic catalysts; stannous octoate, dibutyltin dilaurate, and dibutyltin diacetate. Combinations of amine and organometallic catalysts advantageously may be employed.

Suitable surfactants include the diverse silicone surfactants, preferably those which are block copolymers of a polysiloxane and a polyoxyalkylene. Exemplary of such surfactants are the products DC-193 and Q4-3667 available from Dow Corning, Tegostab B8950 available from Goldschmidt; and GE L6900. When present, the amount of surfactants advantageously employed is from 0.1 to 2, and preferably from 0.2 to 1.3 percent by total weight of the polyol and optional chain extending agent. Other suitable surfactants also include non- silicone containing surfactants, such as poly(alkyleneoxides).

Suitable pigments and fillers include for example calcium carbonate, graphite, carbon black, titanium dioxide, iron oxide, microspheres, alumina trihydrate, wollastonite, prepared glass fibers dropped or continuous, polyesters and other polymeric fibers.

The polyurethane polymer prepared according to the process of this invention is preferably a microcellular polyurethane polymer. Such a polymer is typically prepared by intimately mixing the reaction components at room temperature or a slightly elevated temperature for a short period and then pouring the resulting mixture into an open mold, or injecting the resulting mixture into closed mold, which in either case is heated. The mixture on reacting out takes the shape of the mold to produce a polyurethane polymer of a predefined structure, which can then when sufficiently cured be removed from the mold with a minimum risk of incurring deformation greater than that permitted for its intended end application. Suitable conditions for promoting the curing of the polymer include a mold temperature of typically from 20°C. to 150°C., preferably from 35°C to 75°C, and more preferably from 45°C to 55°C. Such temperatures generally permit the sufficiently cured polymer to be removed from the mold typically in from 1 to 10 minutes and more typically from 1 to 5 minutes after intimately mixing the reactants. Optimum cure conditions will depend on the particular components including catalysts and quantities used in preparing the polymer and also the size and shape of the article manufactured.

The elastomers according to the invention are particularly suitable for use in applications where good energy-absorbing and fatigue properties are required and a good elastomeric behaviour over a broad temperature range, for example in the automotive and footwear industry. The elastomers can be used as in-soles, mid-soles and out-soles of shoes and boots and in steering wheels, sound insulation mats, air-filter seals and dashboard-skins.

The polyesters of 1,3-/1,4-CHDM may also be used in the production of TPUs in a one-shot method or by the two-step method by the formation of a prepolymer. In the one-shot method, all of the components, isocyanate, polyol and additive, are mixed together at once an polymerization is allowed to proceed. In the two-step prepolymer technique, all or some of the polyol is pre-reacted with the isocyanate. The prepolymer is then reacted with the remaining polyol to form the polymer. The reacting polymer mass may be cast into sheets, oven cured to finish the polymerization or chopped into pellets for use.

Alternatively, the polymer may be formed by reaction extrusion, in which the ingredients are fed to an extruder capable of intensive mixing. After polymerization in the extruder, the polymer extrudate is cooled, chopped directly and then packaged.

Additional additives for TPU formulations include wax to aid in mold and a diatomaceous silica for added slip and as anti-blocking agents in films. Antioxidants, such as hindered phenols, and UV stabilizers of the benzotriazole type are used for improved environmental resistance.

The following examples illustrate the present invention but are not intended to limit the scope thereof. All parts and percentages are by weight unless otherwise indicated. Unless stated otherwise, all molecular weights expressed herein are weight average molecular weight.

A description of the raw materials used in the examples is as follows.
- VORALAST GP 3100: is a 1000 equivalent weight (EW) diol (polyester) produced from adipic acid, ethylene glycol and diethylene glycol, available from The Dow Chemical Company. Voralast is a Trademark of The Dow Chemical Company (TDCC).
- ISONATE M 125: is approximately a 98/2 weight percent of 4,4'-/2,4'-MDI available from TDCC. Isonate is a trademark of TDCC.
- ISONATE M 143: is a modified MDI containing MDI monomer and polycarbodiimide adducts, available from TDCC.
- VORALAST* GS749: is a prepolymer based on MDI and polyMEG-DEG- adipate polyols. ; 230 EW (NCO=18 percent), available from The Dow Chemical Company.
- DEG: is diethylene glycol.
- MEG: is mono-ethylene glycol.
- Unoxol diol: is 1,3-/1,4-cyclohexane dimethanol having a 1,3-/1,4- isomer ratio of approximately 58:42, available from The Dow Chemical Company.

Hydrolysis upon aging is performed according to test method UNI EN 344. Tensile strength, elongation at break and flex fatigue resistance are measured according to DIN 53543 test method; density is measured according to ISO 845; abrasion resistance measured according to DIN 53516; and solvent resistance measured according to UNI EN344.

### Example 1. Preparation of polyester polyols

In a 60 dm³ esterification reactor are introduced the dicarboxilic acids and diols as giving in Table 1. The reactor is heated at 210-220°C in an inert atmosphere and in the presence of organometallic catalyst (for example 10 ppm Ti as tetrabutoxide). The reaction is continued for approximately 12 h while condensation water is removed in a nitrogen stream. The residual acidity is less than 1 mgKOH/g.

**TABLE 1**

| Polyol Name | Adipic Acid | DEG | MEG | Unoxol diol | Equivalent Weight | Acidity Number | Functionality |
|---|---|---|---|---|---|---|---|
| | pbw* | pbw | pbw | pbw | g/eq | mgKOH /g | |
| Polyol 1 | 52.7 | 15.1 | | 7.3 | 967 | 0.35 | 2 |
| Polyol 2 | 43.7 | | | 56.3 | 545 | 0.9 | 2 |
| Polyol 3 | 49.9 | 16.1 | | 34.0 | 967 | 0.9 | 2 |
| Polyol 4 | 54.5 | | 11.2 | 36.3 | 967 | 0.9 | 2 |

| | | | | | | | |
|---|---|---|---|---|---|---|---|
| *pbw is parts by weight | | | | | | | |

The melting point of Polyol 2 is found to be about 40°C. By way of comparison, a similar polyol produced with 1,4-cyclohexane dimethanol in place of Unoxol has a melting point of about 93°C. This lower melting point allows for ease of handling in further processing, such as for use in footwear applications, while polyols based on 1,4-CHDM are difficult to process.

### Example 2. Preparation of isocyanate terminated prepolymers

In a 50 dm³ (.05 m³) prepolymerization reactor are introduced isocyanates and polyols as specified in Table 2. The isocyanates are added, the reactor heated to 65°C and the polyols then added at 350 g/min. The reaction mixture is heated to 90°C and reaction continued for 1 h.

**TABLE 2 Prepolymer Recipes**

| Prepolymer Name | Isonate™ 125M | Isonate™ 143M | Branched Polyadipate | Polyol 1 | Polyol 2 | Polyol 3 | Equivalent Weight |
|---|---|---|---|---|---|---|---|
| | pbw | pbw | pbw | pbw | pbw | pbw | g/eq |
| PM 2060 | 57.5 | 5 | | 37.5 | | | 219 |
| PM 2062 | 57.5 | 5 | | | 37.5 | | 228 |
| PM 2063 | 57.5 | 5 | 7.6 | | 29.2 | | 230 |
| PM 2067 | 49.0 | 4.9 | | | | 46.0 | 262 |

### Example 3. Preparation of polyurethane elastomers

Prepolymers of Example 2 are reacted with isocyanate reactive composition in mixture with catalyst, water and surfactants as given in Table 3. The quantity of prepolymer and isocyanate reactive composition that must react with each other are adjusted starting with NCO/OH equivalent ratio. Physical properties of the produced elastomers are given in Table 4.

**TABLE 3 Formulation of PU Elastomers**

| | Example A (Control) | Example B (Control) | Example 3 | Example 4 | Example 5 | Example 6 | Example 7 | Example 8 | Example 9 |
|---|---|---|---|---|---|---|---|---|---|
| | pbw | pbw | pbw | pbw | pbw | pbw | pbw | pbw | pbw |
| GS 749 | 61 | 92 | | | | | | | |
| PM 2060 | | | 56 | | | | | | |
| PM 2062 | | | | 58 | 62 | | 91 | | |
| PM 2063 | | | | | | 62 | | | |
| PM 2067 | | | | | | | | 69 | 70 |
| GP 3100 | 94.51 | 90.4 | 47.51 | 94.51 | 54.51 | 54.51 | 90.4 | 94.51 | 94.51 |
| Polyol 1 | | | 47 | | 20 | 20 | | | |
| Polyol 2 | | | | | | 20 | | | |
| Polyol 3 | | | | | | | | | |
| MEG | 4.08 | 7.7 | 4.08 | 4.08 | 4.08 | 4.08 | 7.7 | 4.08 | 4.08 |
| Unoxol Diol | | | | | | | | | 4.0 |
| Water | 0.05 | 0.35 | 0.05 | 0.05 | 0.05 | 0.05 | 0.35 | 0.05 | 0.05 |
| Catalyst¹ | 1.39 | 1.4 | 1.39 | 1.39 | 1.39 | | 1.4 | 1.39 | 1.39 |
| Surfacant 2 | | 0.1 | | | | | 0.1 | | |

| | | | | | | | | | |
|---|---|---|---|---|---|---|---|---|---|
| ¹Catalyst is 33 percent triethylene diamine in monoethylene glycol; ²Surfactant is DC-193 from Dow Coring Corporation. | | | | | | | | | |

**Table 4**

| | | | Example A | Example B | Example 3 | Example 4 | Example 5 | Example 6 | Example 7 | Example 8 | Example 9 |
|---|---|---|---|---|---|---|---|---|---|---|---|
| Density | ISO 845 | g/cm³ | 1.1 | 0.55 | 1.1 | 1.1 | 1.1 | 1.1 | 0.55 | 1.1 | 1.1 |
| Hardness | DIN 53505 | ShA | 68 | 51 | 62 | 66 | 65 | 64 | 51 | 67 | 61 |
| Tensile Strength | DIN 53543 | MPa | 22.3 | 7.6 | 16.1 | 17.4 | 23.8 | 20.5 | 8.1 | 26.7 | 22.5 |
| Retention after hydrolysis | DIN 53543 | % | 20 | 30 | 44 | 41 | 68 | 75 | 50 | 55 | 55 |
| Retention after hydrolysis (2 weeks) | DIN 53543 | % | 2 | n.a. | 23 | n.a. | 50 | 50 | n.a. | n.a. | n.a. |
| Elongation at Break | DIN 53543 | % | 540 | 440 | 560 | 500 | 430 | 460 | 400 | 550 | 560 |
| Flex Fatigue Before Hydrolysis | DIN 53543 | kcycles | 100 | 10 | 100 | 100 | 10 | 10 | 100 | 100 | 100 |
| Flex Fatigue after Hydrolysis | DIN 53543 | kcycles | 0 | n.a. | n.a. | 50 | 100 | 100 | n.a. | 30 | n.a. |
| Abrasion Resistance | DIN 53516 | mg | 40 | n.a. | n.a. | n.a. | 40 | 41 | n.a. | 47 | n.a. |
| Solvent Resistance | UNI EN 344 | % | < 1 | n.a. | n.a. | n.a. | n.a. | n.a. | < 1 | < 1 | n.a. |

The results show the elastomers of the present invention have good properties before hydrolysis and have greater tensile strength retention and flex fatigue resistance after hydrolysis as compared to the controls.

Other embodiments of the invention will be apparent to those skilled in the art from a consideration of this specification or practice of the invention disclosed herein. It is intended that the specification and examples be considered as exemplary only, with the true scope and spirit of the invention being indicated by the following claims.

## Claims

1. A process for preparing an elastomer by contacting under reaction conditions:
a) an isocyanate component comprising an isocyanate-terminated prepolymer having an isocyanate (NCO) content of 2 to 40 weight percent where the prepolymer is the reaction product of a stoichiometric excess of one or more di-or polyisocyanate with a first polyol composition;
b) a second polyol composition; and
c) an effective amount of a blowing agent to provide a microcellular polyurethane elastomer with a density from 200 to 1200 kg/m³;
wherein a) and b) are provided at an isocyanate Index of from 85 to 115; and the first polyol composition, the second polyol composition, or both, contain a polyester based on at least one polycarboxylic acid or lactone component and glycol component, wherein the glycol component contains isomers of 1,3- and 1,4-cyclohexane dimethanol (1,3-/1,4-CHDM) where the ratio of the 1,3-/1,4-isomers is from 35:65 to 65:35 and 1,3-/1,4-CHDM is from 1 to 30 weight percent of the elastomer.

2. The process of Claim 1 where the polycarboxylic acid is adipic acid, glutaric acid, pimelic acid, suberic acid, azelaic acid, sebacic acid, undecanedioic acid, dodecanedioic acid, succinic, hexanedioic acid; hexahydrophthalic acid, 1,3-cyclohexane dicarboxylic acid, 1,4-cyclohexane dicarboxylic acid; fumaric acid, maleic acid; phthalic acid, terephthalic acid or a mixture thereof.

3. The process of Claim 3 where the polycarboxylic acid is adipic acid, glutaric acid, succinic acid or a mixture thereof, and

4. The process of Claim 1 wherein the polyester contains an additional glycol selected from ethylene glycol, diethylene glycol, propylene glycol, dipropylene glycol, 1,3-propanediol, 1,10-decanediol, glycerine, trimethylolpropane, 1,4-butanediol, 1,6-hexanediol, or a mixture thereof.

5. The process of Claim 1 wherein the polyisocyanate is an aromatic polyisocyanate

6. The process of Claim 5 wherein the polyisocyanate is MDI, TDI, PMDI or a mixture thereof.

7. The process of claim 1 wherein the polyisocyanate is an aliphatic isocyanate.

8. The process of claim 1 wherein the process includes the addition of a chain extender in an amount from 0.5 to 10 percent by weight of the second polyol composition.

9. The process of claim 9 wherein the chain extender is 1,3-cyclohexane dimethanol, 1,4-cyclohexane dimethanol or a mixture thereof.

10. The process of claim 1 wherein water is the blowing agent at 0.05 to 2.0 parts by weight per hundred parts of the second polyol composition.

11. The process of claim 1 wherein the second polyol composition is at least 90 percent by weight polyester polyol.

12. A shoe sole produced by the process of any one of claims 1 to 11.

13. The process of any one of claims 1 to 11 wherein the polyester is the reaction product of at least one polycarboxylic acid and 1,3/1,4-cyclohexane dimethanol.

14. An isocyanate-terminated prepolymer having an isocyanate (NCO) content of 2 to 40 weight percent where the prepolymer is the reaction product of a stoichiometric excess of one or more di- or polyisocyanate with a polyol composition wherein the polyol composition contains at least one polyester wherein 1,3-/1,4-CHDM is from 7 to 60 weight percent of the polyester and the ratio of 1,3- to 1,4-isomers is from 35:65 to 65:35.

15. The prepolymer of claim 14 wherein the polyester comprises 100 weight percent of the polyol composition.

## Patentansprüche

1. Verfahren zur Herstellung eines Elastomers, indem Folgendes unter Reaktionsbedingungen in Kontakt gebracht wird:
a) eine Isocyanatkomponente, die ein isocyanatterminiertes Vorpolymer mit einem Isocyanatgehalt (NCO-Gehalt) von 2 bis 40 Gew.-% umfasst, wobei das Vorpolymer das Reaktionsprodukt eines stöchiometrischen Überschusses von einem oder mehreren Di- oder Polyisocyanaten mit einer ersten Polyolzusammensetzung ist;
b) eine zweite Polyolzusammensetzung; und
c) eine wirksame Menge eines Treibmittels, um ein mikrozelluläres Polyurethanelastomer mit einer Dichte von 200 bis 1200 kg/m³ bereitzustellen;
wobei a) und b) bei einem Isocyanatindex von 85 bis 115 bereitgestellt werden; und wobei die erste Polyolzusammensetzung, die zweite Polyolzusammensetzung oder beide einen auf mindestens einer Polycarbonsäure- oder Lactonkomponente und Glycolkomponente basierenden Polyester enthalten, wobei die Glycolkomponente Isomere von 1,3- und 1,4-Cyclohexandimethanol (1,3-/1,4-CHDM) enthält, wobei das Verhältnis der 1,3-/1,4-Isomere von 35:65 bis 65:35 beträgt und 1,3/1,4-CHDM von 1 bis 30 Gew.-% des Elastomers ausmacht.

2. Verfahren nach Anspruch 1, wobei die Polycarbonsäure Adipinsäure, Glutarsäure, Pimelinsäure, Suberinsäure, Azelainsäure, Sebacinsäure, Undecandisäure, Dodecandisäure, Bernsteinsäure, Hexandisäure; Hexahydrophthalsäure, 1,3-Cyclohexandicarbonsäure, 1,4-Cyclohexandicarbonsäure; Fumarsäure, Maleinsäure; Phthalsäure, Terephthalsäure oder eine Mischung davon ist.

3. Verfahren nach Anspruch 2, wobei die Polycarbonsäure Adipinsäure, Glutarsäure, Bernsteinsäure oder eine Mischung davon ist.

4. Verfahren nach Anspruch 1, wobei der Polyester ein zusätzliches Glycol enthält, das aus Ethylenglycol, Diethylenglycol, Propylenglycol, Dipropylenglycol, 1,3-Propandiol, 1,10-Decandiol, Glycerin, Trimethylolpropan, 1,4-Butandiol, 1,6-Hexandiol oder einer Mischung davon ausgewählt ist.

5. Verfahren nach Anspruch 1, wobei das Polyisocyanat ein aromatisches Polyisocyanat ist.

6. Verfahren nach Anspruch 5, wobei das Polyisocyanat MDI, TDI, PMDI oder eine Mischung davon ist.

7. Verfahren nach Anspruch 1, wobei das Polyisocyanat ein aliphatisches Isocyanat ist.

8. Verfahren nach Anspruch 1, wobei das Verfahren die Zugabe eines Kettenverlängerers in einer Menge von 0,5 bis 10 Gew.-% der zweiten Polyolzusammensetzung beinhaltet.

9. Verfahren nach Anspruch 8, wobei der Kettenverlängerer 1,3-Cyclohexandimethanol, 1,4-Cyclohexandimethanol oder eine Mischung davon ist.

10. Verfahren nach Anspruch 1, wobei Wasser das Treibmittel in einer Menge von 0,05 bis 2,0 Teilen pro 100 Teilen der zweiten Polyolzusammensetzung ist.

11. Verfahren nach Anspruch 1, wobei die zweite Polyolzusammensetzung mindestens 90 Gew.-% Polyesterpolyol ist.

12. Schuhsohle, die nach dem Verfahren gemäß einem der Ansprüche 1 bis 11 hergestellt ist.

13. Verfahren nach einem der Ansprüche 1 bis 11, wobei der Polyester das Reaktionsprodukt von mindestens einer Polycarbonsäure und 1,3/1,4-Cyclohexandimethanol ist.

14. Isocyanatterminiertes Vorpolymer mit einem Isocyanatgehalt (NCO-Gehalt) von 2 bis 40 Gew.-%, wobei das Vorpolymer das Reaktionsprodukt eines stöchiometrischen Überschusses von einem oder mehreren Di- oder Polyisocyanaten mit einer Polyolzusammensetzung ist, wobei die Polyolzusammensetzung mindestens einen Polyester enthält, wobei 1,3-/1,4-CHDM von 7 bis 60 Gew.-% des Polyesters ausmacht und das Verhältnis von 1,3-zu 1,4-Isomeren von 35:65 bis 65:35 beträgt.

15. Vorpolymer nach Anspruch 14, wobei der Polyester 100 Gew.-% der Polyolzusammensetzung umfasst.

## Revendications

1. Procédé de préparation d'un élastomère, dans lequel on met en contact, dans des conditions de réaction :
a) un composant isocyanate qui comprend un prépolymère à groupes terminaux isocyanate présentant une teneur en isocyanate (NCO) de 2 à 40 % en poids, lequel prépolymère est le produit de réaction d'un ou plusieurs diisocyanate(s) ou polyisocyanate(s), utilisé(s) en excès stoechiométrique, et d'une première composition de polyols,
b) une deuxième composition de polyols,
c) et un agent d'expansion, utilisé en une quantité appropriée pour qu'on obtienne un élastomère microcellulaire en polyuréthane présentant une masse volumique de 200 à 1200 kg/m³ ;
et dans lequel procédé l'on met en jeu les composants (a) et (b) en des quantités telles que l'indice d'isocyanate vaut de 85 à 115, et la première composition de polyols ou la deuxième composition de polyols, ou ces deux compositions, contient ou contiennent un polyester formé à partir d'au moins un composant de type lactone ou acide polycarboxylique et d'un composant de type glycol, lequel composant glycol contient des isomères 1,3- et 1,4- du cyclohexane-diméthanol (1,3/1,4-CHDM) en un rapport de ces isomères 1,3/1,4 de 35/65 à 65/35, et lesquels isomères 1,3/1,4-CHDM constituent 1 à 30 % du poids de l'élastomère.

2. Procédé conforme à la revendication 1, dans lequel l'acide polycarboxylique est l'un des suivants : acide adipique, acide glutarique, acide pimélique, acide subérique, acide azélaïque, acide sébacique, acide undécanedioïque, acide dodécanedioïque, acide succinique, acide hexanedioïque, acide hexahydrophtalique, acide 1,3-cyclohexane-dicarboxylique, acide 1,4-cyclohexane-dicarboxylique, acide fumarique, acide maléique, acide phtalique et acide téréphtalique, ou un mélange de ces acides.

3. Procédé conforme à la revendication 2, dans lequel l'acide polycarboxylique est de l'acide adipique, de l'acide glutarique ou de l'acide succinique, ou un mélange de ces acides.

4. Procédé conforme à la revendication 1, dans lequel le polyester comporte des motifs dérivés d'un glycol supplémentaire choisi parmi les suivants : éthylèneglycol, diéthylèneglycol, propylèneglycol, dipropylèneglycol, propane-1,3-diol, décane-1,10-diol, glycérol, triméthylolpropane, butane-1,4-diol et hexane-1,6-diol, ou d'un mélange de ces glycols.

5. Procédé conforme à la revendication 1, dans lequel le polyisocyanate est un polyisocyanate aromatique.

6. Procédé conforme à la revendication 5, dans lequel le polyisocyanate est du MDI, du TDI ou du PMDI, ou un mélange de ces polyisocyanates.

7. Procédé conforme à la revendication 1, dans lequel le polyisocyanate est un polyisocyanate aliphatique.

8. Procédé conforme à la revendication 1, lequel procédé comporte le fait d'ajouter un agent d'allongement de chaînes, en une quantité représentant de 0,5 à 10 % du poids de la deuxième composition de polyols.

9. Procédé conforme à la revendication 8, dans lequel l'agent d'allongement de chaînes est du 1,3-cyclohexane-diméthanol, du 1,4-cyclohexane-diméthanol, ou un mélange de ces composés.

10. Procédé conforme à la revendication 1, dans lequel l'agent d'expansion est de l'eau, qu'on utilise à raison de 0,05 à 2,0 parties pour 100 parties en poids de la deuxième composition de polyols.

11. Procédé conforme à la revendication 1, dans lequel la deuxième composition de polyols comprend au moins 90 % en poids de polyester-polyol.

12. Semelle de chaussure, produite selon un procédé conforme à l'une des revendications 1 à 11.

13. Procédé conforme à l'une des revendications 1 à 11, dans lequel le polyester est le produit de réaction d'au moins un acide polycarboxylique et de 1,3/1,4-cyclohexane-diméthanol.

14. Prépolymère à groupes terminaux isocyanate présentant une teneur en isocyanate (NCO) de 2 à 40 % en poids lequel prépolymère est le produit de réaction d'un ou plusieurs diisocyanate(s) ou polyisocyanate(s), utilisé(s) en excès stoechiométrique, et d'une composition de polyols, laquelle composition de polyols contient au moins un polyester du poids duquel les isomères 1,3/1,4-CHDM représentent de 7 à 60 % et dans lequel le rapport de ces isomères 1,3/1,4 vaut de 35/65 à 65/35.

15. Prépolymère conforme à la revendication 14, dans lequel le polyester constitue 100 % du poids de la composition de polyols.
